# EUROPEAN PATENT SPECIFICATION

(11) **EP 4 271 140 B1**
(45) Date of publication and mention of the grant of the patent: **29.01.2025**
(21) Application number: 22170759.9
(22) Date of filing: 29.04.2022
(51) Int. Cl.: H05B 47/17, H02J 9/00

(54) **EMERGENCY DRIVER FOR AN EMERGENCY LUMINAIRE**
NOTFALLTREIBER FÜR EINE NOTLEUCHTE
PILOTE D'URGENCE POUR UN ÉCLAIRAGE D'URGENCE

(43) Date of publication of application: 01.11.2023
(73) Proprietor: Tridonic GmbH & Co. KG, 6851 Dornbirn (AT)
(72) Inventor: Stevens, Frederick, 6850 Dornbirn (AT)
(74) Representative: Thun, Clemens

(56) References cited:
- EP-A1- 3 910 754
- US-A1- 2013 147 376

## Description

The invention relates to an emergency driver, which is connected to an emergency luminaire, for supplying electric energy to the emergency luminaire in case of an emergency. The emergency driver and the therewith connected emergency luminaire are usually part of an emergency lighting system.

Currently known emergency drivers are equipped with multiple actuators (buttons and/or switches) for allowing a user to set, adjust and check on different aspects of the emergency driver within the emergency lighting system. Usually these known drivers have in particular a test button to perform a function test of the emergency driver, so that a user can check the functionality of the emergency driver, e.g. after installation of the driver within the system. Furthermore, currently known emergency drivers at least also have a switch for adjusting the emergency lighting operation duration, i.e. the time for which the emergency driver operates the emergency luminaire in an emergency and supplies it with power, such that an emergency lighting is provided by the emergency luminaire respectively the emergency lighting system. This ensures that people who are in the vicinity of the emergency luminaire respectively the emergency lighting system in the event of an emergency can safely and quickly leave this environment, for example a building, within the set emergency lighting operation duration time. As this functionality is utmost important in case of an emergency and furthermore individually depends on the respective operating scenario and national regulations, a possibility to adjust this setting is important. However, these separate buttons and/or switches for each function increase the component density and cost of the emergency driver, making it more difficult and expensive to manufacture.

Other known alternative implementations of such emergency drivers set the emergency light operation duration by controlling the emergency driver via near field communication, NFC, or via digital addressable lighting interface, DALI, communication or the like. However, these alternatives are very expensive to implement and each require a corresponding integrated circuit, IC, communication chip in the emergency driver, so that the component density and cost of the emergency driver itself are also greatly increased in such an embodiment.

The EP 3 910 754 A1 relates to an emergency lighting device, comprising: output terminals (5a, 5b) for electrically supplying an emergency lighting means; a port for receiving communication signals, wherein a test switch is connectable to the port; wherein the port is configured to receive selective test start signals from the test switch or non-test start related communication signals; and a controller configured to discriminate the communication signals received at the port in order to correspondingly process the received data as test start signal data or other data.

In US 2013/0147376 A1 an emergency lighting module for providing emergency power to a solid state luminaire is provided.

Thus, the currently known and used implementations for setting and changing the emergency lighting duration were found to be disadvantageous for a compact and cost-efficient design of the emergency driver.

The invention is concerned with the task of providing a method for setting an emergency lighting operation duration of an emergency driver and a respective emergency driver, wherein the method is particularly easily executable on the emergency driver and the emergency driver is particularly easy, inexpensive and compact to manufacture.

This task is solved by a method for setting an emergency lighting operation duration of an emergency driver according to independent claim 1, respectively by the emergency driver itself according to claim 10.

According to the invention the method for setting an emergency lighting operation duration of an emergency driver, which is connected to an emergency luminaire, whereby the emergency driver operates the emergency luminaire in an emergency, and whereby the emergency driver is equipped with a test button for testing functionality of the emergency driver, contains the following steps:
- detecting a first actuation pattern, which is input via the test button, by the emergency driver;
- checking by the emergency driver whether the detected first actuation pattern corresponds to a predetermined pattern;
- evaluating the emergency lighting operation duration by the emergency driver when the detected first actuation pattern corresponds to the predetermined pattern..

Additionally according to the invention an emergency driver is provided, which is configured to perform the said method (or any of its embodiments presented herein). The emergency driver is hereby designed to operate an emergency luminaire (respectively to control the emergency luminaire and supply it with electric energy) in case of an emergency for an emergency lighting operation duration. As previously indicated with regard to the discussed method, the emergency driver is equipped with a test button, which is doubly assigned with respect to its function. Hereby the emergency driver is adapted to recognise an actuation pattern of the test button.

With this implementation the emergency light operation duration is easily settable and adjustable via actuation of the test button, which usually solely is used for performing the functionality check of the emergency driver after installation. Thus, the emergency driver does not need an additional switch or button besides the already present test button for setting the emergency lighting operation duration. Therefore, the user can easily and safely set the emergency lighting operation duration of a respective emergency driver via performing a certain predetermined pattern as a first actuation pattern of the test button. With this configuration it is possible to set the emergency lighting operation duration by simply pressing the test button according to a predetermined pattern to access the second function of the test button. Hereby, it is important that not every actuation that does not trigger the functionality check of the emergency driver, results in a setting/adjusting of the emergency lighting operation duration, but that instead the first actuation pattern of the user is to be checked whether or not it matches a predetermined pattern. This reduces the risk of an accidental adjustment and thus increases the functional reliability of the emergency driver. Thus, with the double assignment of the test button (functionality check and setting/adjusting the emergency lighting operation duration) an easy, safe and straightforward operation of the emergency driver and thus the emergency system is achieved.

Preferably, according to an implementation that is not according to the invention, the emergency driver comprises two preset emergency lighting operation durations, i.e. a first and a second preset emergency lighting operation duration, whereby preferably the first preset emergency lighting operation duration is 1 hour and the second emergency lighting operation duration is 3 hours. Hereby one of the two preset emergency lighting operation durations is a currently set emergency lighting operation duration, wherein in the method step of evaluating the emergency lighting operation duration by the emergency driver when the detected first actuation pattern corresponds to the predetermined pattern the method step further comprises that the emergency driver selects the currently not-set preset emergency lighting operation duration as the set emergency lighting operation duration. Thus, with each actuation pattern input by the user that corresponds to a respective predetermined pattern the emergency driver changes the set emergency lighting operation duration to the previously not-set preset emergency lighting operation duration. In the example of 1 hour and 3 hours being the first and second preset emergency lighting operation duration, the input of the first actuation pattern according to the predetermined pattern switches the set emergency lighting operation duration from a previous value of 1 hour to 3 hours, or vice versa: a previous value of 3 hours to 1 hour. With this implementation a very easy and simple way for quickly setting and changing the emergency lighting operation duration is provided, facilitating operation of the emergency driver. It is further conceivable that more than two preset emergency lighting operation durations are included in the emergency driver, whereas in this implementation the preset emergency lighting operation durations are selected as the set emergency lighting operation duration upon actuation of the test button by the user corresponding to the predetermined pattern in a loop-like manner.

In another optional implementation, that is not according to the invention, of the method for setting the emergency lighting operation duration the emergency driver comprises at least two preset emergency lighting operation durations, i.e. a first and a second preset emergency lighting operation duration, whereby preferably the first preset emergency lighting operation duration is 1 hour and the second emergency lighting operation duration is 3 hours. Hereby in the method step of evaluating the emergency lighting operation duration by the emergency driver when the detected first actuation pattern corresponds to the predetermined pattern, the method step further comprises that the emergency driver sets the emergency lighting operation duration based on the detected type and/or number of the actuations of the test button, wherein preferably the emergency driver sets the first preset emergency lighting operation duration as the set emergency lighting operation duration, when the first actuation pattern corresponds to a first predetermined pattern, and wherein preferably the emergency driver sets the second preset emergency lighting operation duration as the set emergency lighting operation duration, when the first actuation pattern corresponds to a second predetermined pattern. With this implementation the user can easily select and thus set a certain preset emergency lighting operation duration by inputting a first actuation pattern that corresponds to the respective predetermined pattern that is linked to the desired emergency lighting operation duration.

In a first embodiment the predetermined pattern is a timed single continuous test button press. In such an implementation, the initiation of the emergency lighting operation duration adjustment process is facilitated as the user only has to press the test button once for a certain longer duration to continue with the emergency lighting operation duration adjustment process.

In a second embodiment the predetermined pattern is a timed test button press sequence, preferably composed of at least three consecutive actuations of the test button. With this implementation the user has to press the test button in a certain sequence to continue with the emergency lighting operation duration adjustment process. The requirement of multiple actuations of the test button increases safety as the risk of an accidental operation is lowered. Preferably the user has to press the test button three times, whereas it is also possible that a higher number of presses is required to match the predetermined pattern for continuation of the method.

The optional configurations subsequently presented of the method (as well as the emergency driver itself) are independent of how the predetermined pattern is designed, and thus compatible with either of these embodiments. Whereas - as previously mentioned - depending on the configuration of the emergency driver and the respective method it is also conceivable that both mentioned predetermined patterns (continuous test button press and timed test button press sequence) may be valid, whereas the actuation of the test button according to the different predetermined patterns results in a different set emergency lighting operation duration.

According to the invention, the method further comprises the following additional methods steps:
- expecting by the emergency driver an input via the test button within a predetermined time window;
- detecting a second actuation pattern, which is input via the test button, by the emergency driver.

Hereby, the evaluation of the emergency lighting operation duration by the emergency driver when the detected first actuation pattern corresponds to the predetermined pattern is based on a detected type and/or number of actuations of the test button in the second actuation pattern. These additional method steps are preferably included after the method step of checking by the emergency driver whether the detected first actuation pattern corresponds to a predetermined pattern.

With this implementation, the user can easily and safely set the emergency lighting operation duration of a respective emergency driver via performing a certain predetermined pattern as a first actuation pattern of the test button and afterwards performing a certain second actuation pattern, which corresponds to the desired emergency lighting operation duration. Hereby, operational safety of the emergency driver is improved, as the method requires two actuation patterns input by the user, which prevents the emergency lighting operation duration from being changed accidentally. Furthermore, the implementation with the second actuation pattern enables the user to set an individual emergency lighting operation duration adapted to the respective circumstances, whereas the user can freely adjust this setting and is not limited by any preset values for the emergency lighting operation duration. Thus, with the double assignment of the test button (functionality check and setting/adjusting the emergency lighting operation duration) and the necessary two actuation patterns an easy, safe and straightforward method for setting the emergency lighting operation duration and operation of the emergency driver and thus the emergency system is achieved.

Optionally in the method step of evaluating the emergency lighting operation duration by the emergency driver based on the detected type and/or number of actuations of the test button in the second actuation pattern the method step further includes that for each detected press of the test button in the second actuation pattern, the emergency lighting operation duration is extended by a certain time period, wherein preferably the certain time period is 20 minutes, 30 minutes or 1 hour. With this implementation a certain desired emergency lighting operation duration is easily settable/adjustable as the emergency lighting operation duration is simply increased with every actuation of the test button within the predetermined time window. Hereby, further preferably, the certain time period by which the emergency lighting operation duration is respectively extended is fixedly set. In other embodiments it is also conceivable that the certain time period is adjustable by the user.

Optionally the time extension due to a first detected press in the second actuation pattern is different from the time extension generated by a second or third detected press. With this implementation the user can easily set the emergency lighting operation duration to a certain minimum duration by pressing the test button once as the second actuation pattern during the predetermined time window, e.g. 30 minutes or 1 hour. If the emergency lighting operation duration needs to be greater, then the user simply needs to press the buttons more often during the predetermined time window, whereas each additional actuation after the first button press increases the emergency lighting operation duration by a smaller time compared to the certain minimum duration generated by the first button press. This allows for a more precise and easy setting of the emergency lighting operation duration.

Optionally the method after checking by the emergency driver whether the detected first actuation pattern corresponds to the predetermined pattern further comprises if the first actuation pattern matches the predetermined pattern the method step of confirming validity of the first actuation pattern by a first feedback signal controlled by the emergency driver. With this additional step of confirming the validity of the actuation of the user, the user directly receives a feedback weather his input was correctly received. This feedback also may indicate to the user that the predetermined time window for inputting the desired second actuation pattern is active or at least that it is about to be active, which further facilitates the method and also the control of the emergency driver. The feedback signal may be an acoustic and/or optical signal. This additional method step may preferably be performed simultaneously or prior to the method step of expecting by the emergency driver the input via the test button within the predetermined time window.

Optionally the method after evaluating the emergency lighting operation duration by the emergency driver based on the detected type and/or number of actuations in the second actuation pattern further comprises the method step of confirming the set emergency lighting operation duration by a second feedback signal controlled by the emergency driver. With this additional step of confirming the set emergency lighting operation duration, the user directly gets feedback on the respectively set emergency lighting operation duration and thus can check whether the correct emergency lighting operation duration is set. This greatly increases the operational reliability of the emergency driver, since the user can now immediately determine whether the settings made correspond to the desired settings. If the settings made do not match the desired settings, the user can initiate the method again to set a correspondingly desired emergency lighting operation duration.

Further optionally the emergency driver controls the first and/or second feedback signal to be output as a light signal, preferably using a status luminaire of the emergency driver and/or whereby further preferably the emergency driver controls the emergency luminaire to output the first and/or second feedback signal. The implementation of the feedback signal as an optical signal, respectively as a light signal, provides a simple and effective form of feedback, through which the user receives feedback in a particularly uncomplicated and quick manner. Depending on whether the first, the second or both feedback signals are provided in the procedure, the emergency driver can use the emergency luminaire, which usually is coupled to it anyway, or alternatively or additionally an extra status luminaire, which is preferably part of the emergency driver, to output a feedback signal in the form of a light signal. The optical feedback signal can hereby be a specific sequence, e.g. a repeated timed switching on/off of the corresponding light. The configuration that includes the status luminaire also has the advantage that the emergency lighting operation duration can be set in a simple and uncomplicated manner in a scenario in which the emergency driver is not yet coupled to an emergency luminaire. Furthermore, the status luminaire preferably comprises at least one LED, whereby in an embodiment with at least two LEDs, which may have different colours, whereby the optical feedback then can also be characterized by light emitted by the different luminaires, in particular with different colours.

Optionally the method after evaluating the emergency lighting operation duration by the emergency driver based on the detected type and/or number of actuations of the test button (preferably in the second actuation pattern) further comprises the method step of storing by the emergency driver the evaluated emergency lighting operation duration in a memory of the emergency driver. This enables the emergency driver to permanently store a set emergency lighting operation duration, so that even in the event of an interruption of any power supply to the emergency driver, there is no need to set the emergency lighting operation duration again, since the emergency lighting operation duration already set is not lost. If a user sets a new value for the emergency lighting operation duration, an already stored value is overwritten, so that only the new value is stored. This additional method step may preferably be performed simultaneously or prior to the method step of confirming the set emergency lighting operation duration by a second feedback signal controlled by the emergency driver.

Preferably the emergency driver comprises a controller which recognizes actuation of the test button. By means of the controller, pressing the test button can be detected and analysed particularly easily and quickly, whereby this controller can then preferably store the duration set by the user. In addition, the controller can be designed to control the emergency luminaire in order to supply it with electrical energy.

Furthermore, the emergency driver, preferably by means of the controller, may also be able to control certain light emitting characteristics of the emergency luminaire, such as light temperature or brightness, such that in case of an emergency optimal emergency lighting conditions are achieved.

Moreover, it is conceivable that - if the emergency driver is connected to an emergency power module (e.g. a rechargeable battery or another electrical energy storage device) - the emergency driver takes into account the certain light emitting characteristics of the emergency luminaire set in the emergency driver when evaluating the emergency lighting operation duration, as different demands for energy exist depending on the characteristics set. The emergency driver can hereby also take into account the capacity of the emergency power module.

It is also conceivable that in an exemplary design of an emergency lighting system with an emergency power module, that the emergency power module is selected according to the requirements of the emergency lighting, so that in the case of a longer emergency lighting operation duration or, for example, a brighter emergency lighting, an appropriately dimensioned emergency power module is used. In particular, the technical properties of the emergency power module, such as cell count, cell size, cell capacity or cell chemistry, may be considered.

Furthermore, in such an exemplary design of the emergency lighting system with an emergency power module, the charging process of the emergency power module can be controlled accordingly by the emergency driver, whereby in particular various data of the battery charging process such as general charging data or also the duration of the trickle charge may be considered.

Further preferred, the emergency driver comprises an external connection for receiving emergency information, whereas based on received emergency information an emergency is detected. With this implementation the emergency driver can precisely trigger the start of the emergency lighting operation duration in case of an emergency, such that the emergency luminaire is ideally controlled and supplied with electrical energy. This external connection can be wireless and/or wired.

The emergency lighting system comprises at least an emergency driver according to any embodiment presented herein and an emergency luminaire, which is connected to the emergency driver. As previously stated, the emergency driver hereby controls the emergency luminaire and supplies the emergency luminaire with electric energy in case of an emergency. Furthermore, it is possible that multiple emergency luminaires are connected to one emergency driver, whereas the emergency driver may control each of the emergency luminaires individually or jointly.

As previously indicated the emergency lighting system may also comprise an emergency power module, which is connected to the emergency driver for electric energy supply in an emergency. With this implementation the emergency lighting system is equipped with an own power source, e.g. a battery or a module with a connection to an individual emergency power line. Preferably, the emergency power module allows the system to be self-sufficient from the regular power supply, so that in case of an emergency the power supply of the emergency driver and thus of the emergency luminaire is ensured. Preferably, the emergency power module is configured to supply the emergency driver and the emergency luminaire with electrical energy for at least the emergency lighting operation duration. Furthermore, it is also conceivable that the emergency driver, in particular a controller of the emergency driver, is provided with information concerning a state of charge of the emergency power module and controls the energy supply of the emergency luminaire based on this information, e.g. in the event of low remaining energy of the emergency power module, the brightness of the emergency luminaire can be adjusted so that the emergency luminaire emits less bright light, but is able to emit light for a longer period of time. Further, it is also conceivable that the emergency driver is additionally connected to the regular power supply via which the emergency driver can charge the emergency power module.

The invention is explained in detail below with reference to examples of embodiments and with reference to the drawing. The figures show:
- Figure 1: Exemplary schematic representation of an embodiment of an emergency driver according to the invention, which is coupled to an emergency luminaire and an emergency power module;
- Figure 2: Exemplary embodiment of a method for setting an emergency lighting operation duration of an emergency driver according to the invention, illustrated with individual method steps;
- Figure 3A: Exemplary illustration of a time sequence of an exemplary implementation of a first embodiment of the method for setting an emergency lighting operation duration according to the invention;
- Figure 3B: Exemplary illustration of a time sequence of an exemplary implementation of a second embodiment of the method for setting an emergency lighting operation duration according to the invention.

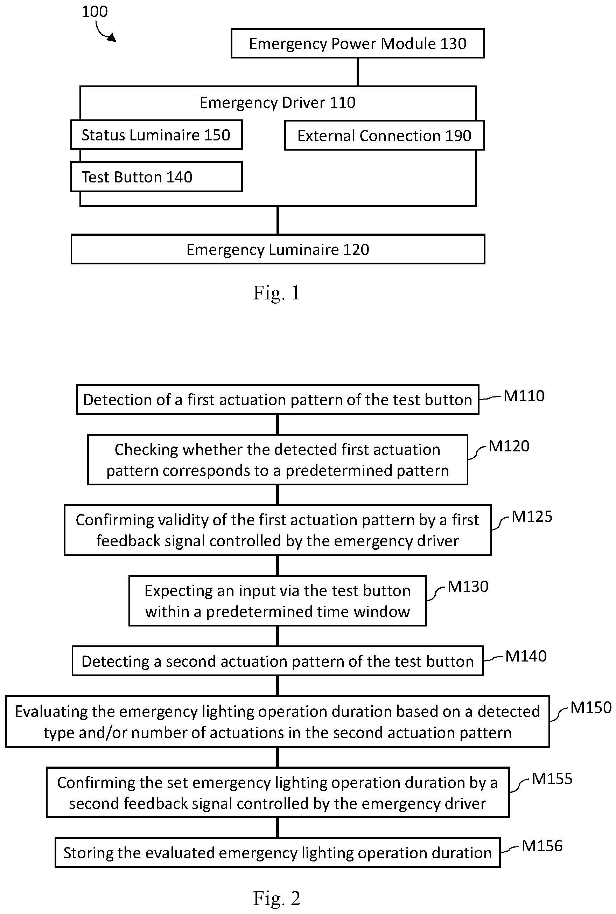

Figure 1 shows an exemplary configuration of an emergency driver 110 according to the invention. Here, the emergency driver 110 is equipped with a test button 140, which (as already explained) usually is used to test the function of the emergency driver 110.

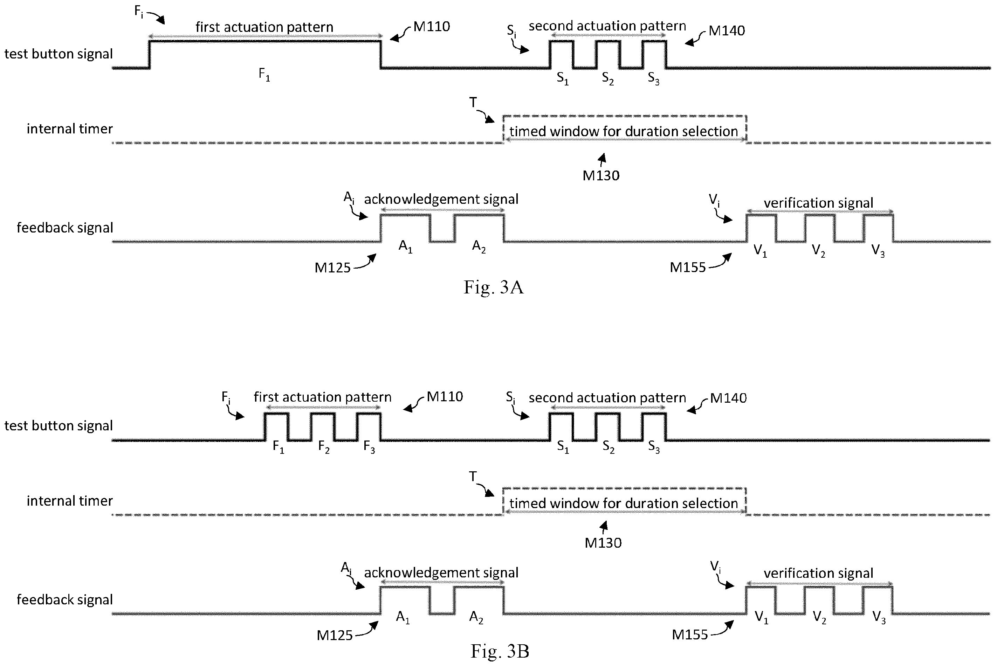

However, the method according to the invention presented here, as shown by way of example in Figures 2, 3A and 3B, makes it possible to double-assign a button, i.e. also this test button 140, so that different functions are accessible depending on how the button is actuated. In particular, it is thus possible to set the emergency lighting operation duration by corresponding actuations of the test button 140 by a user.

If the user actuates the test button 140 of the emergency driver 110, this first actuation pattern Fᵢ is detected M110 by the emergency driver 110, for example by a controller coupled with the test button 140. Subsequently, this first actuation pattern Fᵢ is checked M120 by the emergency driver 110, respectively by the controller of the emergency driver 110, analysing whether this first actuation pattern Fᵢ corresponds to a predetermined pattern.

If the first actuation pattern Fᵢ does not match the predetermined pattern, the method for setting the emergency lighting operation duration is not continued, whereby (due to the double assignment of the test button 140) depending on the entered first actuation pattern Fᵢ the function check of the emergency driver 110 may performed , if the corresponding actuation pattern is input by the user - this is preferably initiated by a single short actuation of the test button 140, since the function test is the usual and main function of the test button 140, and should therefore be quickly accessible.

However, if the first actuation pattern Fᵢ matches the predetermined pattern, the method for setting the emergency lighting operation duration is continued, whereby in the variant shown in Figure 2, the validity of the input first actuation pattern Fᵢ is confirmed M125 to the user by the emergency driver 110 as feedback. This may be achieved by a first feedback signal Aᵢ (acknowledgement signal), which acknowledges the selected mode. This first feedback signal Aᵢ may in particular be optical or acoustic.

Parallel or after the confirmation of validity M125 of the first actuation pattern Fᵢ the emergency driver 110 expects M130 an input via the test button 140 within a predetermined time window T. The user then inputs a second actuation pattern Sᵢ, which corresponds to the desired emergency lighting operation duration, by actuating the test button 140 again. This second actuation pattern Sᵢ is then detected M140 by the emergency driver 110, whereas the second actuation pattern Sᵢ is subsequently analysed by the emergency driver 110.

Based on the detected second actuation pattern Sᵢ the emergency driver evaluates M150 the emergency lighting operation duration based on a detected type and/or number of actuations in the second actuation pattern Sᵢ. Preferably, in this evaluation for each detected press of the test button 140 in the second actuation pattern Sᵢ, the emergency lighting operation duration is extended by a certain time period, such that the number of actuations of the test button 140 during the predetermined time window T is linked to the set emergency lighting operation duration. Hereby it is also possible, that the time extension due to a first detected press within the second actuation pattern Sᵢ is different from the time extension generated by a second or third detected press. This allows the emergency lighting operation duration to be set more finely, provided that the emergency lighting operation duration is to be longer than a respective minimum duration which is achieved by the first press in the second actuation pattern Sᵢ. For example, the first press may set the duration to 30 or 45 minutes or 1 hour, with each subsequent press in the second actuation pattern Sᵢ increasing the duration by only 15, 20 or 30 minutes. The setup of the respective time steps is done during production of the emergency driver 110, whereas it is also conceivable that these respective time steps can be changed subsequently.

Preferably the setting of the emergency lighting operation duration is confirmed by the emergency driver 110 to the user via a second feedback signal Vᵢ, whereas this second feedback signal Vᵢ (verification signal) may also be acoustical or optical.

Furthermore, preferably the emergency driver 110 may store M156 the evaluated emergency lighting operation duration, preferably by means of a memory which is part of the emergency driver 110. The storing M156 may hereby be prior, parallel or after the confirmation of the set emergency lighting operation duration M155, whereas it is also conceivable that the method step of storing M156 is implemented without the additional step of confirming the set emergency lighting operation duration M155.

It is also possible that one or more preset emergency lighting operation durations are stored in the memory upon production of the emergency driver 110, wherein one of these preset durations is selected upon production as a set emergency lighting operation duration, so that the emergency driver 110 can be used immediately after production with this preset duration, whereby an individual emergency lighting operation duration can be set and stored by means of an implementation of the presented method with the first and second actuation patterns Fᵢ, Sᵢ performed by the user, overwriting the preset duration.

Alternatively, as previously mentioned, the different (at least two) preset emergency lighting operation durations may also be selected by the use of another implementation of the presented method, in which only one actuation pattern of the test button 140 by the user is necessary, to switch between the preset emergency lighting operation durations. Furthermore, a preset emergency lighting operation duration may also be selected and thus set as the emergency lighting operation duration by the user via performing a first actuation pattern which corresponds to a respective predetermined pattern which is linked to the respective preset duration. These different implementations of the method are all executable by any implementation of the emergency driver 110 according to the invention, each allowing for an adjustability of the emergency lighting operation duration.

In Figures 3A and 3B two exemplary implementations of the method according to the invention are presented, whereby these implementations differ by the predetermined pattern and thus by the first actuation pattern Fᵢ input by the user. The therein displayed implementations each contain the first actuation pattern Fᵢ as well as the second actuation pattern Sᵢ input via the test button 140 by the user. Each of the two figures shows three exemplary sketch-like signal curves, which show the test button signal, the internal timer and the (optional) feedback signal. The button signal corresponds to the signal that the emergency driver 110 detects when the test button 140 is pressed. The internal timer shows the condition of the emergency driver 110, in which the emergency driver 110 expects a second actuation pattern Sᵢ by the user to set the emergency lighting operation duration. The feedback signal, in turn, illustrates a signal emitted after a detected user input, for example the first and/or second actuation pattern Fᵢ, Sᵢ. Furthermore, in Figures 3A and 3B, references to the method steps from Figure 2 are inserted for better understanding.

In the first exemplary embodiment (see Figure 3A), the first actuation pattern Fᵢ entered by the user is formed by a single prolonged continuous press of the test button 140, which is detected M110 by the emergency driver 110 as a single prolonged first actuation pattern signal F₁. Thus, the predetermined pattern is a timed single continuous test button press.

In the second exemplary embodiment (see Figure 3B), the first actuation pattern Fᵢ entered by the user is formed by three short consecutive presses of the test button 140, which are then detected M110 by the emergency driver 110 as the three short consecutive first actuation pattern signals F₁, F₂ and F₃. Thus, in the therein presented embodiment the predetermined pattern is a timed test button press sequence, composed of three consecutive actuations of the test button 140.

While the variant of the predetermined pattern shown in Figure 3A is particularly easy and quick to carry out, the variant shown in Figure 3B is characterised by being particularly safe from unintentional actuation of the test button 140.

In each embodiment the emergency driver 110 subsequently checks M120 whether the detected first actuation pattern Fᵢ corresponds to the predetermined pattern, whereas in the here shown embodiment of Figure 3A this single prolonged first actuation pattern signal F₁ matches the respective predetermined pattern, and in the shown embodiment of Figure 3B the three short consecutive first actuation pattern signals F₁, F₂ and F₃ match the respective predetermined pattern.

In both the first example in Figure 3A and the second example in Figure 3B, the emergency driver 110 subsequently emits an acknowledgment signal, respectively a first feedback signal Aᵢ, which in the exemplary shown embodiments consists of two consecutive medium long feedback signals A₁, A₂, which may be in form of an acoustic or optical signal. This first feedback signal Aᵢ, confirms the validity of the input first actuation pattern Fᵢ M125, such that the user knows that he may proceed with inputting a second actuation pattern Sᵢ in order to set the desired emergency lighting operation duration.

Subsequent to sending the first feedback signal M125 the emergency driver 110 expects M130 an input via the test button 140 via the user within a predetermined time window T. The user inputs the desired second actuation pattern Sᵢ which is individually designed to correspond to the respective requirements for the emergency lighting operation duration. In the shown exemplary embodiments of Figures 3A and 3B the second actuation pattern Sᵢ consists of three short consecutive second actuation pattern signals S₁, S₂ and S₃, which are respectively detected M140 by the emergency driver 110. The duration of the time window T may be set during production of the emergency driver 110, whereas it is also conceivable that the duration of the time window T can be changed afterwards.

After expiry of the time window T, the emergency lighting operation duration is evaluated M150 based on the input received (i.e. the second actuation pattern Sᵢ). Hereby the type and/or number of actuations in the second actuation pattern may be analysed, as previously discussed.

Furthermore, the user is preferably informed of the success of the setting of the emergency lighting operation duration via a second feedback signal (verification signal) Vᵢ M155. Different configurations of the second feedback signal Vᵢ are hereby conceivable, whereby, for example, this second feedback signal Vᵢ may be static - i.e. independent of the properties of the second actuation pattern Sᵢ - so that the emergency driver 110 always outputs the same second feedback signal Vᵢ after detecting M140 the second actuation pattern Sᵢ. Alternatively, it can also be provided that the emergency driver 110 outputs a second feedback signal Vᵢ that is adapted to the user's input during the time window T (i.e. dynamic second feedback signal), so that the detected input may be displayed to the user, allowing him to check on his input.

These feedback signals Aᵢ, Vᵢ, which are controlled by the emergency driver 110, may be output by the emergency luminaire itself, or as displayed in Figure 1 via a status luminaire 150, which is part of the emergency driver 110 and preferably comprises at least one LED.

As previously indicated an implementation of the method having solely one actuation pattern of the user - i.e. the first actuation pattern Fᵢ - is also conceivable. Hereby the method steps of expecting by the emergency driver 110 an input via the test button 140 within a predetermined time window T; and detecting a second actuation pattern Sᵢ, which is input via the test button 140, by the emergency driver 110, which are shown in Figures 2, 3A and 3B are not required, as the emergency lighting operation duration is set by a first actuation pattern Fᵢ that matches a predetermined pattern. Hereby various different possibilities for setting the emergency lighting operation duration are conceivable as already mentioned before. Hereby it is further possible that the first feedback signal Aᵢ controlled by the emergency driver 110, indicates and acknowledges to the user that the input is well received and that an emergency lighting operation duration is set.

Furthermore - also displayed in Figure 1 - the emergency driver preferably comprises an external connection 190, which is used to receive communication signals e.g. from an external lighting management system. Via these communication signals received by the external connection 190 the emergency driver 110 may receive emergency information, whereas based on received emergency information an emergency is detected.

When the emergency driver 110 detects an emergency the set emergency lighting operation duration is started, whereas the emergency luminaire 120, which is connected to the emergency driver 110, is provided with electrical energy to emit a certain emergency lighting. Hereby the electrical energy is preferably supplied via an emergency power module 130, which is connected to the emergency driver 110, controlling and operating the emergency luminaire 120.

The emergency driver 110 and the emergency luminaire 120 as well as - if present - the emergency power module 130 are part of the emergency lighting system 100, as shown in Figure 1.

Thus, the embodiments of the method for setting the emergency lighting operation duration described herein provide an efficient, safe and uncomplicated procedure that can be carried out on an emergency driver 110, provided that it has (at least) one button (or switch) 140. The emergency driver 110 described herein is also characterised by the fact that it can be built in a particularly compact, space-saving and cost-effective manner due to only having one button - the test button 140 - whereas further components such as additional buttons/switches or additional ICs (such as with NFC or DALI) are not required. Furthermore, due to the reduction of components also electromagnetic interference, EMI, is reduced, further improving operational safety of the emergency driver 110.

With regard to the nomenclature used in this application, it should be noted that designations such as "first" or "second" etc. are purely eponymous and do not establish any sequence or succession (or the like). In this respect, for example, embodiments are conceivable in which a "second element" (e.g. second feedback signal Vᵢ) exists, but no "first element" (e.g. first feedback signal Aᵢ).

## Claims

1. Method for setting an emergency lighting operation duration of an emergency driver (110), which is connected to an emergency luminaire (120),
whereby the emergency driver (110) operates the emergency luminaire (120) in an emergency,
and whereby the emergency driver (110) is equipped with a test button (140) for testing functionality of the emergency driver (110),
whereas the method contains the following steps:
a) detecting a first actuation pattern (Fᵢ) (M110), which is input via the test button (140), by the emergency driver (110);
b) checking (M120) by the emergency driver (110) whether the detected first actuation pattern (Fᵢ) corresponds to a predetermined pattern;
**characterised by** further comprising the following steps:
c) expecting (M130) by the emergency driver (110) an input via the test button (140) within a predetermined time window (T);
d) detecting a second actuation pattern (Si) (M140), which is input via the test button (140), by the emergency driver (110);
e) evaluating (M150) the emergency lighting operation duration by the emergency driver (110) when the detected first actuation pattern (Fᵢ) corresponds to the predetermined pattern is based on a detected type and/or number of actuations of the test button (140) in the second actuation pattern (Si),
wherein for each detected press of the test button (140) in the second actuation pattern (Si), the emergency lighting operation duration is extended by a certain time period.

2. Method for setting an emergency lighting operation duration according to claim 1, **characterized in**
**that** the predetermined pattern is a timed single continuous test button press.

3. Method for setting an emergency lighting operation duration according to claim 1, **characterized in**
**that** the predetermined pattern is a timed test button press sequence, preferably composed of at least three consecutive actuations of the test button.

4. Method for setting an emergency lighting operation duration according to any one of the preceding claims 1 to 3,
wherein the certain time period is 20 minutes, 30 minutes or 1 hour, and/or
wherein the time extension due to a first detected press in the second actuation pattern (Sᵢ) is different from the time extension generated by a second or third detected press.

5. Method for setting an emergency lighting operation duration according to any one of the preceding claims 1 to 4,
**characterized in**
**that** the method after evaluating (M150) the emergency lighting operation duration by the emergency driver (110) based on the detected type and/or number of actuations in the second actuation pattern (Sᵢ) further comprises:
- confirming the set emergency lighting operation duration (M155) by a second feedback signal (Vᵢ) controlled by the emergency driver (110).

6. Method for setting an emergency lighting operation duration according to any one of the preceding claims,
**characterized in**
**that** the method after checking (M120) by the emergency driver (110) whether the detected first actuation pattern (Fᵢ) corresponds to the predetermined pattern further comprises if the first actuation pattern (Fᵢ) matches the predetermined pattern:
- confirming validity (M125) of the first actuation pattern (Fᵢ) by a first feedback signal (Aᵢ) controlled by the emergency driver (110).

7. Method for setting an emergency lighting operation duration according to claim 5 and/or claim 6,
**characterized in**
**that** the emergency driver (110) controls the first and/or second feedback signal (Fᵢ, Sᵢ) to be output as a light signal, preferably using a status luminaire (150) of the emergency driver (110) and/or whereby further preferably the emergency driver (110) controls the emergency luminaire (120) to output the first and/or second feedback signal (Fᵢ, Sᵢ).

8. Method for setting an emergency lighting operation duration according to any one of the preceding claims,
**characterized in**
**that** the method after evaluating (M150) the emergency lighting operation duration by the emergency driver (110) based on the detected type and/or number of actuations of the test button (140) further comprises:
- storing (M156) by the emergency driver (110) the evaluated emergency lighting operation duration in a memory of the emergency driver (110).

9. Emergency driver (110) for an emergency luminaire (120),
wherein the emergency driver (110) is equipped with a test button (140), which is doubly assigned with respect to its function,
and wherein the emergency driver (110) is configured to operate the emergency luminaire (120) for an emergency lighting operation duration in an emergency,
wherein the emergency driver (110) is adapted to recognise an actuation pattern of the test button (140) and is further configured to perform a method according to any one of claims 1 to 8.

10. Emergency driver according to claim 9,
**characterized in**
**that** the emergency driver (110) comprises a controller which recognizes actuation of the test button (140).

11. Emergency driver according to any one of the preceding claims 9 or 10, **characterized in**
**that** the emergency driver (110) comprises a status luminaire (150), which preferably comprises at least one LED.

12. Emergency driver according to any one of the preceding claims 9 to 11, **characterized in**
**that** the emergency driver (110) further comprises an external connection (190) for receiving emergency information, whereas based on received emergency information an emergency is detected.

13. Emergency lighting system (100) comprising:
- an emergency driver (110) according to any of the claims 9 to 12, and
- an emergency luminaire (120), which is connected to the emergency driver (110), whereas the emergency driver (110) controls the emergency luminaire (120) and supplies the emergency luminaire (120) with electric energy in an emergency, wherein preferably the emergency lighting system (100) comprises an emergency power module (130), which is connected to the emergency driver (110) for electric energy supply in an emergency.

## Patentansprüche

1. Verfahren zum Einstellen einer Notbeleuchtungsbetriebsdauer eines Notfalltreibers (110), der an eine Notleuchte (120) angeschlossen ist,
wobei der Notfalltreiber (110) die Notleuchte (120) in einem Notfall betreibt,
und wobei der Notfalltreiber (110) mit einer Testtaste (140) zum Testen der Funktionalität des Notfalltreibers (110) ausgestattet ist,
wobei das Verfahren die folgenden Schritte enthält:
a) Erkennen eines ersten Betätigungsmusters (Fᵢ) (M110), das über die Testtaste (140) eingegeben wird, durch den Notfalltreiber (110);
b) Prüfen (M120), durch den Notfalltreiber (110), ob das erkannte erste Betätigungsmuster (Fᵢ) einem vorgegebenen Muster entspricht;
**dadurch gekennzeichnet, dass** es ferner die folgenden Schritte umfasst:
c) Erwarten (M130), durch den Notfalltreiber (110), einer Eingabe über die Testtaste (140) innerhalb eines vorgegebenen Zeitfensters (T);
d) Erkennen eines zweiten Betätigungsmusters (Si) (M140), das über die Testtaste (140) eingegeben wird, durch den Notfalltreiber (110);
e) Auswerten (M150) der Notbeleuchtungsbetriebsdauer durch den Notfalltreiber (110), wenn das erkannte erste Betätigungsmuster (Fᵢ) dem vorgegebenen Muster entspricht, basierend auf einer erkannten Art und/oder Anzahl von Betätigungen der Testtaste (140) in dem zweiten Betätigungsmuster (Si),
wobei bei jedem erkannten Drücken der Testtaste (140) in dem zweiten Betätigungsmuster (Si) die Notbeleuchtungsbetriebsdauer um eine bestimmte Zeitspanne verlängert wird.

2. Verfahren zum Einstellen einer Notbeleuchtungsbetriebsdauer nach Anspruch 1, **dadurch gekennzeichnet,**
**dass** das vorgegebene Muster ein zeitgesteuerter, einzelner kontinuierlicher Testtastendruck ist.

3. Verfahren zum Einstellen einer Notbeleuchtungsbetriebsdauer nach Anspruch 1, **dadurch gekennzeichnet,**
**dass** das vorgegebene Muster eine zeitgesteuerte Testtastendruckfolge ist, die vorzugsweise aus mindestens drei aufeinanderfolgenden Betätigungen der Testtaste zusammengesetzt ist.

4. Verfahren zum Einstellen einer Notbeleuchtungsbetriebsdauer nach einem der vorstehenden Ansprüche 1 bis 3,
wobei die bestimmte Zeitspanne 20 Minuten, 30 Minuten oder 1 Stunde beträgt und/oder
wobei sich die Zeitverlängerung aufgrund eines ersten erkannten Drückens in dem zweiten Betätigungsmuster (Sᵢ) von der Zeitverlängerung unterscheidet, die durch ein zweites oder drittes erkanntes Drücken erzeugt wird.

5. Verfahren zum Einstellen einer Notbeleuchtungsbetriebsdauer nach einem der vorstehenden Ansprüche 1 bis 4,
**dadurch gekennzeichnet,**
**dass** das Verfahren nach dem Auswerten (M150) der Notbeleuchtungsbetriebsdauer durch den Notfalltreiber (110) basierend auf der erkannten Art und/oder Anzahl von Betätigungen in dem zweiten Betätigungsmuster (Sᵢ) ferner umfasst:
- Bestätigen der eingestellten Notbeleuchtungsbetriebsdauer (M155) durch ein zweites Rückmeldesignal (Vᵢ), das durch den Notfalltreiber (110) gesteuert wird.

6. Verfahren zum Einstellen einer Notbeleuchtungsbetriebsdauer nach einem der vorstehenden Ansprüche,
**dadurch gekennzeichnet,**
**dass** das Verfahren nach dem Prüfen (M120) durch den Notfalltreiber (110), ob das erkannte erste Betätigungsmuster (Fᵢ) dem vorgegebenen Muster entspricht, ferner umfasst, wenn das erste Betätigungsmuster (Fᵢ) mit dem vorgegebenen Muster übereinstimmt:
- Bestätigen der Gültigkeit (M125) des ersten Betätigungsmusters (Fᵢ) durch ein erstes Rückmeldesignal (Ai), das durch den Notfalltreiber (110) gesteuert wird.

7. Verfahren zum Einstellen einer Notbeleuchtungsbetriebsdauer nach Anspruch 5 und/oder Anspruch 6,
**dadurch gekennzeichnet,**
**dass** der Notfalltreiber (110) das erste und/oder das zweite Rückmeldesignal (Fᵢ, Sᵢ), die als Lichtsignal ausgegeben werden sollen, vorzugsweise unter Verwendung einer Statusleuchte (150) des Notfalltreibers (110) steuert und/oder wobei ferner vorzugsweise der Notfalltreiber (110) die Notleuchte (120) steuert, um das erste und/oder das zweite Rückmeldesignal (Fᵢ, Sᵢ) auszugeben.

8. Verfahren zum Einstellen einer Notbeleuchtungsbetriebsdauer nach einem der vorstehenden Ansprüche,
**dadurch gekennzeichnet,**
**dass** das Verfahren nach dem Auswerten (M150) der Notbeleuchtungsbetriebsdauer durch den Notfalltreiber (110) basierend auf der erkannten Art und/oder Anzahl der Betätigungen der Testtaste (140) ferner umfasst:
- Speichern (M156), durch den Notfalltreiber (110), der ausgewerteten Notbeleuchtungsbetriebsdauer in einem Speicher des Notfalltreibers (110).

9. Notfalltreiber (110) für eine Notleuchte (120),
wobei der Notfalltreiber (110) mit einer Testtaste (140) ausgestattet ist, die in Bezug auf ihre Funktion doppelt zugewiesen ist,
und wobei der Notfalltreiber (110) konfiguriert ist, um die Notleuchte (120) in einem Notfall während einer Notbeleuchtungsbetriebsdauer zu betreiben,
wobei der Notfalltreiber (110) angepasst ist, um ein Betätigungsmuster der Testtaste (140) zu erkennen, und ferner konfiguriert ist, um ein Verfahren nach einem der Ansprüche 1 bis 8 durchzuführen.

10. Notfalltreiber nach Anspruch 9,
**dadurch gekennzeichnet,**
**dass** der Notfalltreiber (110) eine Steuerung umfasst, die eine Betätigung der Testtaste (140) erkennt.

11. Notfalltreiber nach einem der vorstehenden Ansprüche 9 oder 10, **dadurch gekennzeichnet,**
**dass** der Notfalltreiber (110) eine Statusleuchte (150) umfasst, die vorzugsweise mindestens eine LED umfasst.

12. Notfalltreiber nach einem der vorstehenden Ansprüche 9 bis 11, **dadurch gekennzeichnet,**
**dass** der Notfalltreiber (110) ferner eine externe Verbindung (190) zum Empfangen von Notfallinformationen umfasst, wobei basierend auf empfangenen Notfallinformationen ein Notfall erkannt wird.

13. Notbeleuchtungssystem (100), umfassend:
- einen Notfalltreiber (110) nach einem der Ansprüche 9 bis 12 und
- eine Notleuchte (120), die mit dem Notfalltreiber (110) verbunden ist, wobei der Notfalltreiber (110) die Notleuchte (120) steuert und in einem Notfall die Notleuchte (120) mit Elektroenergie versorgt,
wobei vorzugsweise das Notbeleuchtungssystem (100) ein Notstrommodul (130) umfasst, das mit dem Notfalltreiber (110) zur Elektroenergieversorgung in einem Notfall verbunden ist.

## Revendications

1. Procédé permettant de régler une durée de fonctionnement d'éclairage de secours d'un pilote de secours (110) qui est connecté à un luminaire de secours (120),
moyennant quoi le pilote de secours (110) fait fonctionner le luminaire de secours (120) en cas d'urgence,
et moyennant quoi le pilote de secours (110) est équipé d'un bouton de test (140) pour tester une fonctionnalité du pilote de secours (110),
tandis que le procédé contient les étapes suivantes consistant à :
a) détecter un premier modèle d'actionnement (Fᵢ) (M110), qui est entré par l'intermédiaire du bouton de test (140), par le pilote de secours (110) ;
b) vérifier (M120) par le pilote de secours (110) si le premier modèle d'actionnement détecté (Fᵢ) correspond à un modèle prédéterminé ;
**caractérisé par le fait qu'**il comprend en outre les étapes suivantes consistant à :
c) attendre (M130) par le pilote de secours (110) une entrée par l'intermédiaire du bouton de test (140) dans une fenêtre temporelle prédéterminée (T) ;
d) détecter un second modèle d'actionnement (Si) (M140), qui est entré par l'intermédiaire du bouton de test (140), par le pilote de secours (110) ;
e) évaluer (M150) la durée de fonctionnement d'éclairage de secours par le pilote de secours (110) lorsque le premier modèle d'actionnement (Fᵢ) détecté correspondant au modèle prédéterminé est basé sur un type et/ou un nombre d'actionnements détectés du bouton de test (140) dans le second modèle d'actionnement (Si),
dans lequel, pour chaque pression détectée sur le bouton de test (140) dans le second modèle d'actionnement (Si), la durée de fonctionnement d'éclairage de secours est prolongée d'une certaine période de temps.

2. Procédé permettant de régler une durée de fonctionnement d'éclairage de secours selon la revendication 1, **caractérisé en ce**
**que** le modèle prédéterminé est une pression unique et continue temporisée sur un bouton de test.

3. Procédé permettant de régler une durée de fonctionnement d'éclairage de secours selon la revendication 1, **caractérisé en ce**
**que** le modèle prédéterminé est une séquence temporisée d'appui sur un bouton de test, composée de préférence d'au moins trois actionnements consécutifs du bouton de test.

4. Procédé permettant de régler une durée de fonctionnement d'éclairage de secours selon l'une quelconque des revendications précédentes 1 à 3,
dans lequel la certaine période de temps est de 20 minutes, 30 minutes ou 1 heure, et/ou
dans lequel la prolongation de temps due à une première pression détectée dans le second modèle d'actionnement (Sᵢ) est différente de la prolongation de temps générée par une deuxième ou une troisième pression détectée.

5. Procédé permettant de régler une durée de fonctionnement d'éclairage de secours selon l'une quelconque des revendications précédentes 1 à 4,
**caractérisé en ce**
**que** le procédé, après évaluation (M150) de la durée de fonctionnement d'éclairage de secours par le pilote de secours (110) sur la base du type et/ou du nombre d'actionnements détectés dans le second modèle d'actionnement (Sᵢ), comprend en outre :
- la confirmation de la durée de fonctionnement d'éclairage de secours réglée (M155) par un second signal de rétroaction (Vᵢ) commandé par le pilote de secours (110).

6. Procédé permettant de régler une durée de fonctionnement d'éclairage de secours selon l'une quelconque des revendications précédentes,
**caractérisé en ce**
**que** le procédé, après vérification (M120) par le pilote de secours (110) du fait de savoir si le premier modèle d'actionnement (Fᵢ) détecté correspond au modèle prédéterminé, comprend en outre, si le premier modèle d'actionnement (Fᵢ) correspond au modèle prédéterminé :
- la confirmation de la validité (M125) du premier modèle d'actionnement (Fᵢ) par un premier signal de rétroaction (Ai) commandé par le pilote de secours (110).

7. Procédé permettant de régler une durée de fonctionnement d'éclairage de secours selon la revendication 5 et/ou la revendication 6,
**caractérisé en ce**
**que** le pilote de secours (110) commande le premier et/ou le second signal de rétroaction (Fᵢ, Sᵢ) pour qu'il soit émis sous forme de signal lumineux, de préférence à l'aide d'un luminaire d'état (150) du pilote de secours (110) et/ou, moyennant quoi, de préférence encore le pilote de secours (110) commande le luminaire de secours (120) pour émettre le premier et/ou le second signal de rétroaction (Fᵢ, Sᵢ).

8. Procédé permettant de régler une durée de fonctionnement d'éclairage de secours selon l'une quelconque des revendications précédentes,
**caractérisé en ce**
**que** le procédé, après évaluation (M150) de la durée de fonctionnement d'éclairage de secours par le pilote de secours (110) sur la base du type et/ou du nombre d'actionnements détectés du bouton de test (140), comprend en outre :
- le stockage (M156) par le pilote de secours (110) de la durée évaluée de fonctionnement d'éclairage de secours dans une mémoire du pilote de secours (110).

9. Pilote de secours (110) pour un luminaire de secours (120),
dans lequel le pilote de secours (110) est équipé d'un bouton de test (140) qui possède une double affectation par rapport à sa fonction,
et dans lequel le pilote de secours (110) est configuré pour faire fonctionner le luminaire de secours (120) pendant une durée de fonctionnement d'éclairage de secours en cas d'urgence,
dans lequel le pilote de secours (110) est conçu pour reconnaître un modèle d'actionnement du bouton de test (140) et est en outre configuré pour effectuer un procédé selon l'une quelconque des revendications 1 à 8.

10. Pilote de secours selon la revendication 9,
**caractérisé en ce**
**que** le pilote de secours (110) comprend un dispositif de commande qui reconnaît un actionnement du bouton de test (140).

11. Pilote de secours selon l'une quelconque des revendications précédentes 9 ou 10, **caractérisé en ce**
**que** le pilote de secours (110) comprend un luminaire d'état (150), qui comprend de préférence au moins une DEL.

12. Pilote de secours selon l'une quelconque des revendications précédentes 9 à 11, **caractérisé en ce**
**que** le pilote de secours (110) comprend en outre une connexion externe (190) pour recevoir des informations d'urgence, tandis que, sur la base d'informations d'urgence reçues, une urgence est détectée.

13. Système d'éclairage de secours (100) comprenant :
- un pilote de secours (110) selon l'une quelconque des revendications 9 à 12, et
- un luminaire de secours (120) qui est connecté au pilote de secours (110), tandis que le pilote de secours (110) commande le luminaire de secours (120) et alimente le luminaire de secours (120) en énergie électrique en cas d'urgence,
dans lequel le système d'éclairage de secours (100) comprend de préférence un module d'alimentation de secours (130), qui est connecté au pilote de secours (110) pour une alimentation en énergie électrique en cas d'urgence.
